# EUROPEAN PATENT SPECIFICATION

(11) **EP 1 701 027 B1**
(45) Date of publication and mention of the grant of the patent: **28.12.2016**
(21) Application number: 05101916.4
(22) Date of filing: 11.03.2005
(51) Int. Cl.: F02D 41/30, F02B 11/02, F02D 41/02, F02D 41/40

(54) **A method for using partial homogeneous charge compression ignition in a diesel internal combustion engine for NOx trap regeneration**
Methode für die Regeneration eines NOx-Speichers in einem Dieselmotors mittels Kompressionszündung einer teilweise homogenen Ladung
Méthode d'utilisation en mode de l'auto allumage de charge homogène partiel dans un moteur diesel pour régénérer un piège à NOx

(43) Date of publication of application: 13.09.2006
(73) Proprietor: Ford Global Technologies, Inc., Dearborn, MI 48126 (US)
(72) Inventor: Jacobsson, Lisa, 414 69, Göteborg (SE); Somhurst, Joop, 414 59, Göteborg (SE)
(74) Representative: Ekström, Nils

(56) References cited:
- EP-A- 1 132 597
- US-A1- 2003 121 249
- US-A1- 2004 084 010
- US-A1- 2004 182 359
- US-B1- 6 276 130

## Description

### TECHNICAL FIELD

The invention relates to a method for controlling a diesel internal combustion engine being able to run in a conventional mode and in a partial Homogeneous Charge Compression Ignition mode (pHCCI). The invention further relates to a method for operating the engine in a rich pHCCI-mode.

### BACKGROUND ART

A major problem for engine manufacturers all over the world is to combine the features of low fuel consumption and low emissions of particulate matter (PM), unburned hydrocarbons (HC), carbon monoxide (CO) and nitrogen oxides (NOₓ). Generally speaking, there are two different ignition systems for Internal Combustion engines (IC-engines), Spark Ignition (SI) and Compression Ignition (CI) of which the latter is the one generally used for diesel engines. CI-engines, e.g. diesel engines, have an advantage in view of SI-engines regarding the fuel consumption. In order to further reduce the harmful emissions in CI-engines, it has been suggested to run the engines in a partial Homogeneous Charge Compression Ignition mode (pHCCI) instead of the conventional mode. The pHCCI mode differs from the conventional mode in that the fuel is more evenly distributed in the piston chamber and more diluted by gases from the Exhaust Gas Recirculation (EGR) system while ignited. In the conventional mode the difference in concentrations of fuel, at different locations in the combustion chamber, will cause the ignition to start at substantially one location. Hence, the ignition will start at the place being most beneficial for a combustion reaction, i.e. when the pressure and temperature in the combustion chamber are high enough to ignite the combustion mixture at the location where the air/fuel mixture (A/F-mixture) is right. Furthermore, the way the fuel is combusted in the combustion chamber will contribute to maintain a lower temperature throughout the combustion which causes less production of NOₓ. In the conventional mode, having heterogeneous charge compression ignition combustion, the burnt gas temperature will be highly heterogeneous with very high local temperatures values creating high NOₓ emissions.

However, when performing this lean pHCCI, like in conventional lean modes, there is still a production of NOₓ which will be absorbed by a NOₓ-absorbent in an exhaust gas treatment system. To regenerate the NOₓ-absorbent, there is a need to use a rich combustion mode. In US 6,276,130, it is described how an engine is controlled to be run in a Homogeneous Charge Compression Ignition (HCCI) mode and while being run in this mode, it can switch between a first, lean A/F-mixture whereby NOₓ is absorbed to a second, rich A/F-mixture whereby NOₓ is released.

However, there are still several problems associated with the regeneration according to US 6,276,130. One major problem is that the suggested mode of operating the engine will have a very small operating window in respect of engine load and speed for fulfilling all the required parameters as set in the patent. This means there will be a need to change from the HCCI-mode rather often and to frequently use the less desirable conventional rich mode. Furthermore, in conventional rich mode, there is always a great risk of oil dilution, i.e. the part of the fuel being injected adheres to the liner of the cylinder and mixes with the oil, when using a rich A/F-mixture. US 6,276,130 is silent as to how this problem can be solved.

Also EP 1 132 597 describes a method for controlling an engine to switch between a first and a second combustion mode wherein the first mode may be lean or rich. However, EP 1 132 597 is primarily directed to lower the soot production and neither this document discuss the problem of oil dilution

Hence, there is a need for an improved and better method for controlling a diesel engine in order to regenerate a NOₓ-absorbent associated with the engine.

### DISCLOSURE OF INVENTION

The invention relates to a method for operating a diesel internal combustion engine provided with at least one cylinder and a piston provided with a piston bowl cavity, said engine comprising:
- a fuel injection system comprising at least one fuel injector, through which fuel is injected into a combustion chamber, for each cylinder;
- a control unit that controls said fuel injection system;
- at least one inlet valve for admitting gas which includes fresh air into said cylinder;
- at least one exhaust valve for exhausting combusted gases from said cylinder;
- an exhaust gas recirculation conduit for recirculating exhaust gases into the cylinder.

The engine is connected to an exhaust gas treatment system comprising a NOₓ-absorbent and the control unit is arranged to be able to switch the engine from a first conventional combustion mode to a second partial Homogeneous Charge Compression Ignition (pHCCI) mode. The pHCCI mode is operable in a lean mode for a lean fuel mixture and in a rich mode for a rich fuel mixture, respectively.

In this context, the term "conventional mode" relates to a normal operating mode for a diesel engine characterised by diffusion controlled combustion. Hence, this conventional mode differs from the pHCCI-mode in which the EGR-ratio is higher, the ignition delay is longer and the fuel is more evenly distributed in the combustion chamber before ignition occurs.

The invention further has the features of switching the pHCCI mode from lean pHCCI to rich pHCCI as a response to a control signal indicating that the NOₓ-absorbent shall be regenerated. In this rich pHCCI mode, the ratio of recirculated exhaust gases is from 20 to 55% and will be mixed with air so as to form the combustion gas being admitted to the cylinder. Said rich pHCCI mode is further defined in that the central axis of a fuel spray in a main injection for each working cycle is directed towards the piston bowl cavity. The main injection comprises at least 70% of the fuel to be injected in each working cycle.

The control signal indicating that the NOₓ-absorbent shall be regenerated can be based on several different criteria: Direct measurements of the amount of NOₓ stored in the NOₓ-absorbent exceeding a certain value, the use of mathematical models based on relevant parameters to estimate a value of stored NOₓ, having a schedule of regeneration cycles to be performed etc. For the purpose of the invention, it is not important how the control signal indicating that there shall be a change of pHCCI mode from lean to rich A/F-mixture is generated, the invention will work for any suitable way of indicating that a change of modes shall occur.

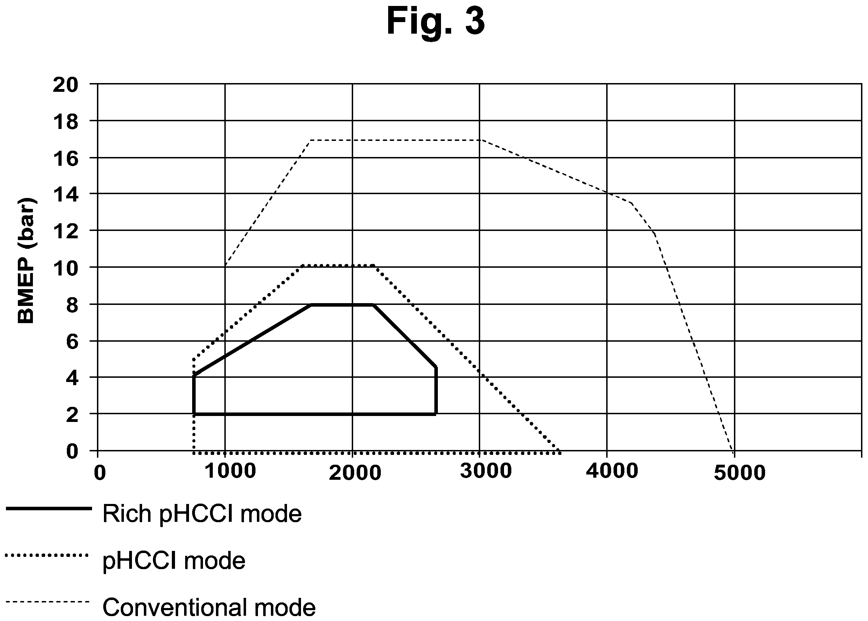

It is further described that the EGR ratio used in the rich pHCCI mode is from 20 to 55%, i.e. 20 to 55% of the exhaust gases are recirculated mixed with air in order to form the gas admitted to the cylinder, the so called combustion gas. This interval of EGR will allow the rich pHCCI to be performed in a wider range than have been achieved before. As will be shown in connection with figure 3, the operating window in a diagram having Break Mean Effective Pressure (BMEP) on one of its axis and the engine speed on its orthogonal axis, is for this rich pHCCI mode considerably larger than the ones used before. Hence, this novel way of controlling the engine will increase the possibility to use rich pHCCI for the engine.

One of the great benefits of this rich pHCCI mode is the reduction of oil dilution associated with the rich regeneration of the NOₓ-absorbent. As is evident from the claims, the major part of the fuel to be injected is injected in the main injection for each working cycle wherein the central axis of the injected fuel is directed towards the piston bowl cavity. Hence, by using rich pHCCI instead of a rich, conventional mode is it possible to avoid injecting fuel in such a way that it hits the liner of the cylinder which leads to oil dilution problems due to fuel sticking to said liner. Usually when running a diesel engine in a rich mode, there is an early pilot injection and/or one or more late, large post injections. These kinds of injections are usually associated with oil dilution problems. The present idea does not use any large post or pilot injections and avoids or diminishes the problem with oil dilution. As a result of decreased oil dilution, wear of the piston and cylinder will diminish, losses of power due to increased friction between the piston and the cylinder can be avoided and less frequent change of oil will be needed.

Hence, by increasing the operating window of the rich pHCCI mode, by using the method of controlling the engine according to the features described in claim 1, this way of controlling the engine will have the benefit of less oil dilution.

A further aspect of the invention is that the rich pHCCI mode is allowed to have a Filter Smoke Number (FSN) value from 0.5 to 3.5. By allowing a higher soot formation, during the rich pHCCI mode, than what is common today, it is possible to extend the rich pHCCI operating window with a beneficial fuel economy and less oil dilution compared to conventional rich combustion mode. As engines have been controlled earlier, they have been forced to switch to conventional mode for regeneration when reaching a certain soot formation as taught for example in US 6,276,130. In contrast to the intuition of a person skilled in the art, whose intuitive thinking would tell him to seek for solutions which suppress the soot formation, it has been surprisingly acknowledged that the allowance of higher soot formation in rich pHCCI may contribute to an overall positive effect with benefits concerning oil dilution and fuel economy. However, since there is allowed a relatively high rate of soot production, this mode of operation is advantageously combined with some kind of soot filter or other exhaust gas treating device adapted to convert the soot to harmless emissions. The FSN number can be measured using the method and instrumentation described in the manual for AVL 415S Variable Sampling Smoke Meter, ID number AT0699E, available from the AVL LIST GMBH, Graz, Austria.

In yet another aspect of the invention, the main injection of said rich pHCCI mode is injected in the interval of 30 degrees Before Top Dead Centre (BTDC) to 15 degrees After Top Dead Centre (ATDC), preferably in the interval of 30 degrees BTDC to 9 degrees ATDC. By defining the crank angle interval during which the main injection will occur it can be derived at which angles the fuel shall be injected in order to assure that the main axis of the fuel spray will be directed towards the piston bowl cavity.

In another aspect of the invention, the temperature of said gas being admitted to the cylinder, i.e. the temperature of the combustion gas entering the cylinder, during said rich pHCCI mode is in the interval of 60 to 200 degrees Celsius, preferably in the interval of 60 to 130 degrees Celsius. In order to achieve a more homogeneous fuel mixture, it is suggested to use a relatively low temperature of the inlet gas in order to let the injected fuel have time to spread and mix with the combustion gas in the combustion chamber. A lowering of the temperature of the combustion gas will result in a reduction of soot formation which in turn will widen the operation window for rich pHCCI combustion.

In a further aspect of the invention, the rich pHCCI mode further comprises a pilot and/or a post injection in a working cycle wherein the fuel injected in the pilot and/or post injection vaporises before it reaches a liner of a cylinder wall, if it is directed towards the liner. The use of a small pilot and/or post injection may contribute to stabilise the combustion and widen the operating window in which it is possible to perform rich pHCCI. To avoid that the fuel reaches the liner it is important that these injections are relatively small. It may also help if the injected fuel is atomised so that the fuel may mix with the combustion gas and diffuse into the gas.

In yet another aspect of the invention there is only one single main injection injected in each working cycle in the rich pHCCI mode. Hence, all fuel injected in a working cycle in said rich pHCCI mode is injected in the main injection. By injecting all the fuel at one time, in the main injection, it can be assured that all the fuel will be directed towards the piston bowl cavity. For a large part of the operating area, this will be the optimal injection strategy for lowest fuel consumption and emissions during the regeneration.

### BRIEF DESCRIPTION OF DRAWINGS

In the following, the invention will be described with reference to the appended drawings, wherein
- Fig. 1: is a schematic drawing of a cylinder of an engine;
- Fig. 2: is a schematic drawing of an engine set up with an exhaust gas treating system;
- Fig. 3: is a graph of pHCCI and rich pHCCI operation window;
- Fig. 4: is a graph of the rich pHCCI operation window indicating rate of soot formation in different areas;
- Fig. 5: is a graph of the regeneration timing with rich pHCCI, and
- Fig. 6: is a schematic drawing of the fuel spray injected at different instants of a combustion cycle

### EMBODIMENTS OF THE INVENTION

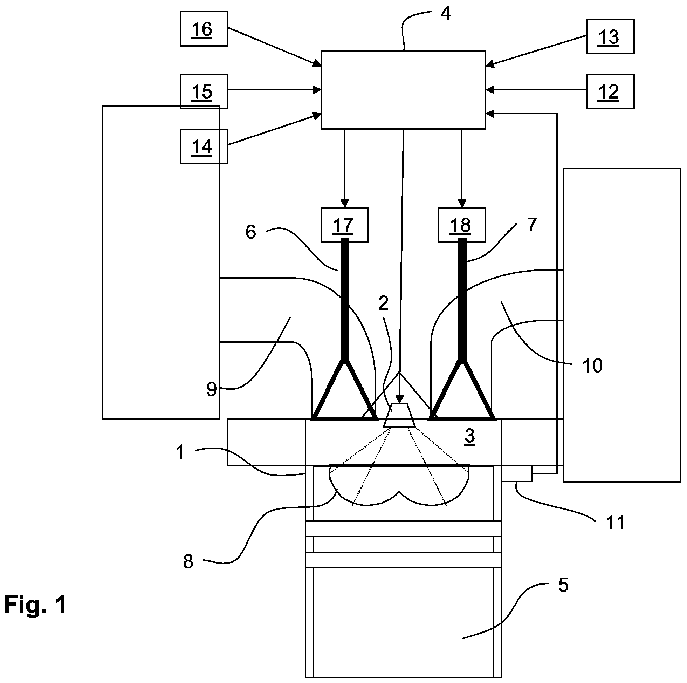

Figure 1 shows a schematic illustration of a cylinder of an internal combustion engine according to the invention. The engine is provided with at least one cylinder 1 and comprises a fuel injector 2, through which fuel is injected into a combustion chamber 3, for each cylinder. A fuel injection control unit 4 controls the timing and quantity of fuel injected through each fuel injector during a combustion cycle. A piston 5 in the engine cylinder has a compression action that causes a mixture of air and fuel within the combustion chamber to be ignited by compression ignition. The cylinder is provided with at least one inlet valve 6 for admitting gas, the so called combustion gas, which includes fresh air into said cylinder and at least one exhaust valve 7 for exhaust gases from said cylinder. The piston is further provided with a piston bowl cavity 8. Combustion gas is supplied through an intake conduit 9 connected to an intake manifold, while exhaust gas is exhausted through an exhaust conduit 10.

The control unit receives signals from at least one sensor for measuring engine operation parameters, which sensors include a combustion chamber pressure sensor 11, an intake manifold pressure sensor 12 and a λ-probe 13 in the exhaust conduit, as well as temperature sensors for intake air 14, engine coolant 15 and engine oil 16. The control unit controls the intake and exhaust valves 6, 7 by means of valve actuators 17, 18. The actuators may be either electrically or mechanically operated.

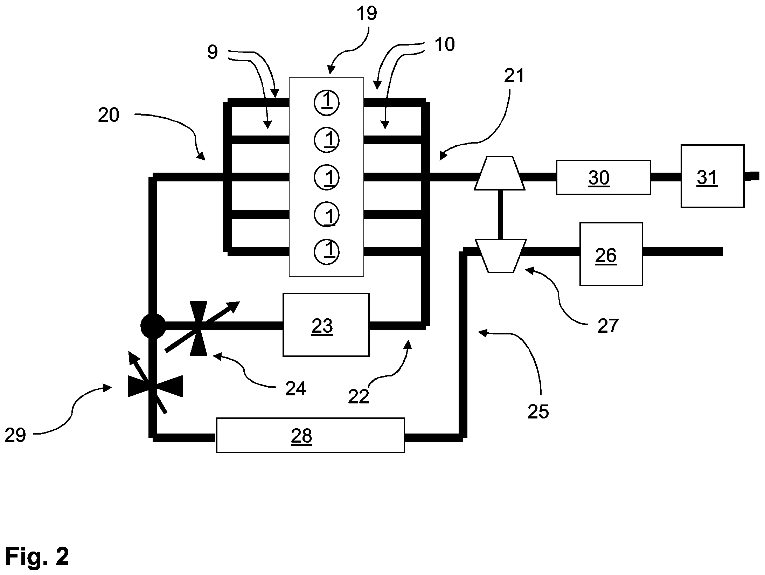

In figure 2, a set up of an internal combustion engine is shown. The engine 19 is connected to the intake conduits 9, one for each cylinder, connected to an intake manifold 20 through which gas is to be admitted to the cylinders 1, while exhaust gas is exhausted through exhaust conduits 10 which are assembled into an exhaust manifold 21. A part of the exhaust gases from the exhaust manifold 21 may be recirculated to the intake manifold 20 through an Exhast Gas Recirculation (EGR) conduit 22. The conduit is provided with a cooler 23 followed by a EGR throttle 24 downstream in order to control the amount of exhaust gases to be recirculated. The EGR conduit 22 is connected to the air intake conduit 25. The air intake conduit is provided with a filter 26 and a turbo charger 27 driven by the exhaust gases. Downstream the turbo, there is an intercooler 28 and an air throttle 29 in order to control the flow of intake air. The part of the exhaust gases which are not recirculated are led through the exhaust gas treatment system. The exhaust gases from the combustion which not are recirculated passes first a turbo charger 27 and downstream there is a NOₓ-absorbent 30 followed by a particulate filter 31.

The engine and exhaust gas treatment set up may be changed in several ways, for example the cooler of the EGR conduit may be provided with a bypass conduit. Furthermore, the EGR conduit may be a short or long route EGR conduit. Long route EGR is a form of low pressure EGR where the exhaust gas is taken after the turbine and admitted before the compressor. At present, the throttle of the EGR conduit is located on the cold side of the EGR cooler but it may as well be positioned on the hot side. The particulate filter is located downstream the NOₓ-absorbent in the example above. However, the particulate filter could also be placed upstream the NOₓ-absorbent. In addition, the exhaust gas treatment may also comprise an oxidation catalyst or other gas treating arrangements. Furthermore, the engine is exemplified as a 5-cylinder engine. The basic principle of the inventive idea would work for any number of cylinders in a diesel IC-engine. Likewise, the configuration of the EGR conduit and the intake air conduit with its cooling and filtering systems can also be arranged in different ways. The skilled person in the art realises this is just an example of arrangements in order to control the temperature of the resulting gas to be admitted to the cylinders, the so called combustion gas, and to control the amount and ratios of recirculated exhaust gases and intake air to form the resulting combustion gas.

The rich and lean pHCCI operation windows are shown in Figure 3 as a function of Break Mean Effective Pressure (BMEP) and engine speed. The rich pHCCI operation window is limited at higher loads by a value of 3.50 FSN. The smoke value is allowed to be this high due to the following reasons: First, the engine shall at conditions outside the rich pHCCI operation window, but inside the lean pHCCI operation window, be operated in lean pHCCI which produces low engine out emissions such as PM and NOₓ. Secondly, if there are to large emissions of particulate matter in the rich pHCCI mode, the exhaust gas treatment system can be provided with a particulate filter. The highest load depends primarily on boosting of the combustion gas and cooling of the exhaust gases recirculated through the EGR conduit, which plays a major role for keeping the temperature of the combustion gas admitted to the cylinder low. Sufficient EGR-cooling and a turbo that gives enough pressure of the combustion gas, e.g. a two stage turbo system or a Variable Geometry Compressor (VGC) and turbine, will result in a large operation window and the rich pHCCI have been possible to operate up to 8 BMEP (bar) in experiments. Further improvements in EGR cooling will increase the operating window further and make the pHCCI be operable for even higher BMEP. The operation windows shown in figure 3 shall not be considered as defining absolute numbers wherein the different modes are operable, but rather as a general definition about in which areas more or less the different modes are possible and the extension of the windows compared to each other.

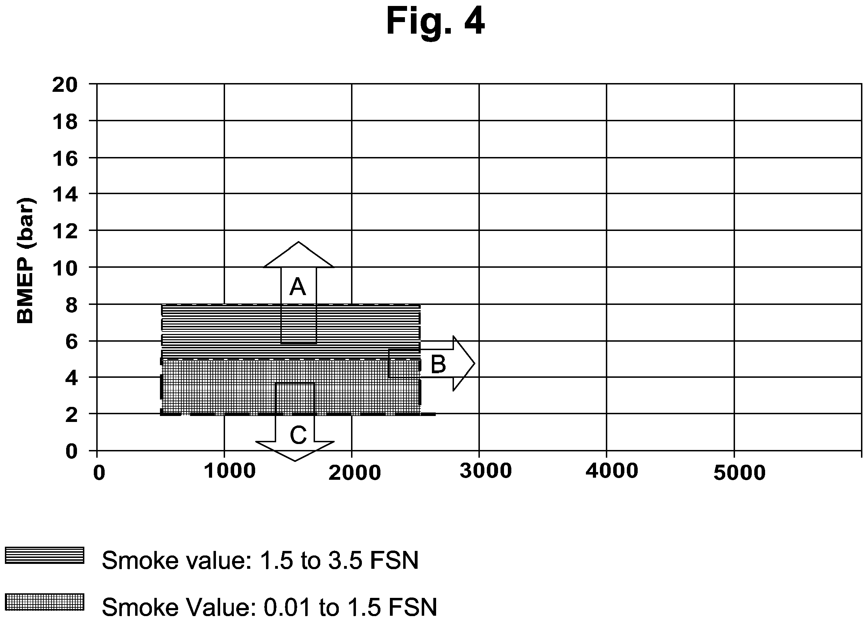

However, as can be seen in figure 4, the operation window will always be larger if a higher smoke value is allowed. The rich pHCCI operation window is divided in two parts: A first, checked area wherein the FSN value is about 0.01 to 1.5 and a second, striped area wherein the FSN value is about 1.5 to 3.5. As a rough estimation, half the operation window will disappear if the smoke value is limited to be below 1.5 FSN. By increasing this window, by the use of the features as described in claim 1 of the present invention, the possibility to use the rich pHCCI mode in regeneration of the NOₓ-absorbent will increase. Furthermore, the relatively low ratio of EGR in the rich pHCCI mode, as compared to for example US 6,276,130, will contribute to make it easier to keep the temperature of the intake gas mixture to the cylinders low. The operation window shown in figure 4 can be enlarged by controlling parameters towards desired values. For example, when the upper limit concerning the load is reached, the window can be extended in the direction indicated by arrow "A" in the figure, to allow operation at higher loads. This can be achieved by increasing the amount of air admitted to the cylinder and/or reducing the temperature of the combustion gas. A reduction of the combustion gas temperature will also extend the operation window in the direction indicated by arrow "B", to allow higher engine speed, when the upper engine speed limit is reached. Extension of the operation window in the direction indicated by arrow "C", i.e. to allow rich pHCCI operation at lower loads when the lower load limit is reached, can be achieved by increasing the temperature of the combustion gas.

Under rich pHCCI conditions at low load, the temperature of the combustion gas is low and this might result in slow combustion, misfires and instabilities in the combustion. In order to increase the gas temperature, a higher EGR temperature may be obtained for example by using an EGR cooler bypass and / or a pre-catalyst in the EGR conduit. Another way of increasing the combustion gas temperature, alone or together with the raise of temperature of the recirculated gases, is to increase the temperature of the intake air by, for example, letting the intake air bypass the intercooler. The limit at lower torques will be extended and the operation window for the rich pHCCI mode will be expanded. Furthermore, in order to stabilise the combustion in this region of the operating window, a small pilot injection might help.

The larger the rich pHCCI operation window will be, the less need there is for the rich conventional regeneration mode to be used and thus an improved performance of the engine concerning the problem with oil dilution will be achieved. The rich pHCCI will also reduce the fuel consumption when compared to conventional rich combustion.

The rich pHCCI mode allows high EGR rates and requires a low amount of air in the combustion compared to other rich strategies. The low amount of air will make it possible to use a lower amount of fuel to reach a certain Lambda. Thus, the regeneration will have a better fuel economy compared to other rich strategies. Another property of the rich pHCCI mode is that it is very easy to reduce Lambda compared to the conventional rich mode.

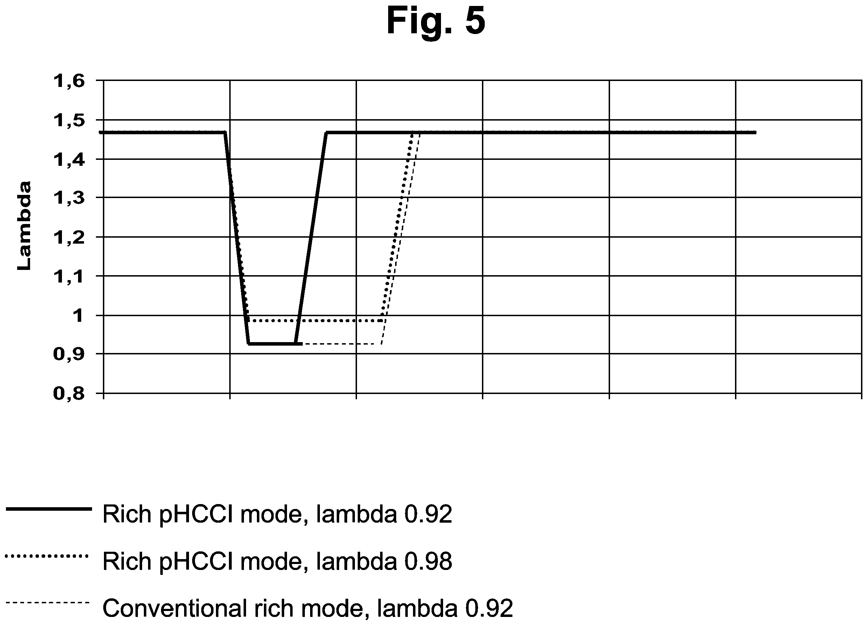

As shown in figure 5, the rich conventional mode is compared with the rich pHCCI mode. The lower fuel consumption is the result of either performing the regeneration using the same Lambda value with better fuel economy for the same regeneration period, or using a lower Lambda and a shorter regeneration period, which will improve fuel economy even more.

What is evident is that the fuel consumption, while performing a regeneration of the NOx absorbent in a rich pHCCI mode, can be lower than when performing the regeneration in a conventional rich combustion. With the above described features of the present invention it is enabled to use this advantageous mode in a larger range of driving conditions than what has been possible before.

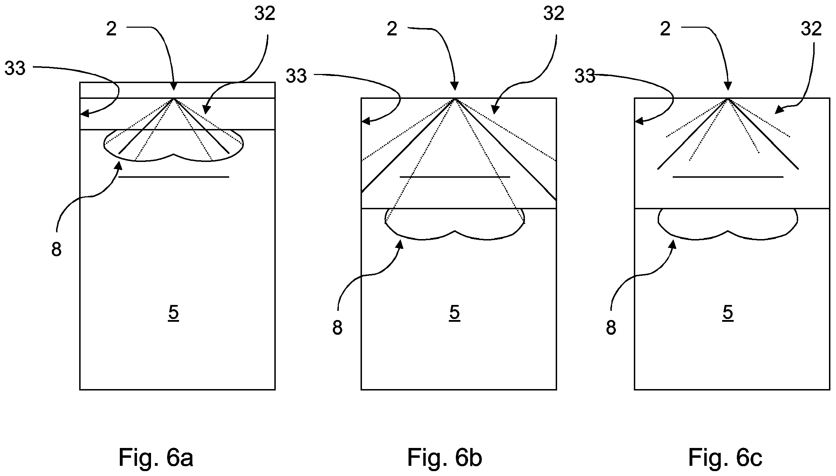

Figure 6 illustrates the feature of the direction of a fuel spray 32 in relation to the position of the piston 5 and the piston bowl cavity 8. The fuel spray 32 is injected by the fuel injector 2. As can be seen in figure 6a, the central axis of the fuel spray 32, represented by the continuous, middle line of the spray 32, is directed toward the piston bowl cavity 8. This corresponds to the circumstance when the fuel is injected in the main injection. The spray is mainly focused near its central axis. Due to a number of factors, for example the construction of the nozzle and the spray head, the spray will diffuse and be more spread around its central axis further away from the nozzle head. The diffusion or spreading of the spray is represented by the dotted lines on either side of the continuous line. In figure 6a, the complete fuel spray 32 will be within the piston bowl cavity.

In figure 6b, the fuel spray 32 is shown as usually operated in the late post or early pilot injection. As can be seen in the figure, the central axis of the fuel spray 32 is directed towards the liner 33.

The present invention suggests a fuel injection strategy which solves the problem with oil dilution which might arise due to injection of fuel as described in figure 6b. Usually when operating a diesel engine in a rich mode, there is an early, large pilot injection and/or one or more late, large post injections. In these injections, usually at least half of the fuel for each working cycle is injected. These kinds of injections are usually associated with oil dilution problems due to fuel being directed towards and hitting the cylinder liner so as to stick at said cylinder liner.

A first way of preventing this problem is to only inject fuel in one, single main injection. In this case, all of the fuel injected in a working cycle will be directed towards the piston bowl cavity as shown in figure 6a. A second way of solving this problem, which is illustrated in figure 6c, is to only inject a small amount of fuel in the pilot and/or the post injections so that the fuel spray 32, when injected in a direction towards the cylinder liner 33, will vaporise or mix with the combustion air before it reaches the cylinder liner 33. In figure 6c, the timing of the injection is the same as in figure 6b, but due to injection of less fuel there will be no fuel which reaches the liner 33. Hence, by avoiding any large pilot or post injections, wherein the fuel spray not is directed towards the piston bowl cavity, the problem with oil dilution due to the fuel strategy associated with the rich A/F-mixture operation mode of a diesel engine can be and avoided or diminished.

## Claims

1. A method for operating a diesel internal combustion engine (19) provided with at least one cylinder (1) and a piston (5) provided with a piston bowl cavity (8), said engine (19) comprising:
- a fuel injection system comprising at least one fuel injector (2), through which fuel is injected into a combustion chamber (3), for each cylinder (1);
- a control unit (4) that controls said fuel injection system;
- at least one inlet valve (6) for admitting gas which includes fresh air into said cylinder (1);
- at least one exhaust valve (7) for exhausting combusted gases from said cylinder (1);
- an exhaust gas recirculation conduit (22) for recirculating exhaust gases into the cylinder (1),
said engine (19) being connected to an exhaust gas treatment system comprising a NOₓ-absorbent (30), said control unit (4) being arranged to be able to switch the engine (19) from a first conventional combustion mode to a second partial Homogeneous Charge Compression Ignition (pHCCI) mode having a limited operating window in respect of engine load and speed, said pHCCI mode being operable in a lean mode for a lean fuel mixture and in a rich mode for a rich fuel mixture respectively, said method comprises a step that the pHCCI mode is switched from lean pHCCI to rich pHCCI as a response to a control signal indicating that the NOₓ-absorbent (30) shall be regenerated, said rich pHCCI mode having a ratio of recirculated exhaust gases of 20 to 55% in the gas being admitted to the cylinder (1), wherein in said rich pHCCI mode the central axis of a fuel spray (32) in a main injection for each working cycle is directed towards said piston bowl cavity (8), said main injection comprising at least 70% of the fuel to be injected in each working cycle, **characterized in that** said rich pHCCI mode is allowed to have a Filter Smoke Number (FSN) value from 0.5 to 3.5 to allow the operating window of the engine to be extended during rich pHCCI mode, which extension of the operating window is achieved by
- increasing intake air volume and/or reducing combustion air temperature, to allow operation at higher loads,
- increasing combustion air temperature, to allow operation at lower loads, or
- reducing combustion air temperature, to allow operation at higher speed.

2. A method according to claim 1 characterized i n that said main injection of fuel in said rich pHCCI mode is injected in the interval of 30 degrees Before Top Dead Centre (BTDC) to 15 degrees After Top Dead Centre (ATDC), preferably in the interval of 30 degrees BTDC to 9 degrees ATDC.

3. A method according to any of claim 1-2 **characterized in that** the temperature of said gas being admitted to the cylinder (1) during said rich pHCCI mode is in the interval of 60 to 200 degrees Celsius, preferably in the interval of 60 to 130 degrees Celsius.

4. A method according to any of claim 1-3 **characterized in that** said rich pHCCI mode further comprises a pilot and/or a post injection in a working cycle wherein said fuel injected in the pilot and/or post injection vaporises before it reaches a liner (33) of a cylinder wall, if the fuel spray (32) is directed towards the liner.

5. A method according to any of claim 1-3 **characterized in that** all fuel injected in a working cycle in said rich pHCCI mode is injected in the main injection.

## Patentansprüche

1. Verfahren zum Betreiben einer Diesel-Verbrennungskraftmaschine (19), die mit zumindest einem Zylinder (1) und einem mit einer Kolbenmuldenkavität (8) versehenen Kolben (5) versehen ist, wobei die Kraftmaschine (19) Folgendes umfasst:
- ein Kraftstoffeinspritzsystem, umfassend zumindest einen Kraftstoffeinspritzer (2), durch welchen Kraftstoff in eine Verbrennungskammer (3) eingespritzt wird, für jeden Zylinder (1);
- eine Steuereinheit (4), die das Kraftstoffeinspritzsystem steuert;
- zumindest ein Einlassventil (6) zum Einlassen von Gas, welches Frischluft aufweist, in den Zylinder (1);
- zumindest ein Auslassventil (7) zum Auslassen von Verbrennungsgasen aus dem Zylinder (1);
- eine Abgasrückführungsleitung (22) zum Rückleiten von Abgasen in den Zylinder (1),
wobei die Kraftmaschine (19) mit einem ein NOₓ-Absorbens (30) umfassenden Abgasaufbereitungssystem verbunden ist, wobei die Steuereinheit (4) dazu angeordnet ist, die Kraftmaschine (19) von einem ersten herkömmlichen Verbrennungsmodus auf einen zweiten Modus der partiellen Homogenen Kompressionszündung (pHCCI) mit einem begrenzten Betriebsfenster in Bezug auf Motorlast und Geschwindigkeit umzuschalten, wobei der pHCCI-Modus in einem mageren Modus für einen mageren Mischkraftstoff bzw. einem fetten Modus für einen fetten Mischkraftstoff betrieben werden kann, wobei das Verfahren einen Schritt umfasst, bei dem der pHCCI-Modus als Antwort auf ein Steuersignal, das angibt, dass das NOₓ-Absorbens (30) zu regenerieren ist, von der mageren pHCCI auf die fette pHCCI umgeschaltet wird, wobei der fette pHCCI-Modus einen Anteil rückgeführter Abgase von 20 bis 55 % in dem in den Zylinder (1) eingelassenen Gas aufweist, wobei beim fetten pHCCI-Modus die Mittelachse eines Kraftstoffspritzstrahls (32) in einer Haupteinspritzung für jeden Arbeitszyklus auf die Kolbenmuldenkavität (8) gerichtet ist, wobei die Haupteinspritzung zumindest 70 % des in jedem Arbeitszyklus einzuspritzenden Kraftstoffs umfasst, **dadurch gekennzeichnet, dass** zugelassen wird, dass der fette pHCCI-Modus einen Wert der Schwärzungszahl (FSN) von 0,5 bis 3,5 aufweist, um ein Erweitern des Betriebsfensters der Kraftmaschine während des fetten pHCCI-Modus zuzulassen, wobei die Erweiterung des Betriebsfensters erreicht wird durch
- Steigern des Ansaugluftvolumens und/oder Senken der Verbrennungslufttemperatur, um Betrieb bei höheren Lasten zuzulassen,
- Steigern des Ansaugluftvolumens und/oder Senken der Verbrennungslufttemperatur, um Betrieb bei höheren Lasten zuzulassen, oder
- Senken der Verbrennungslufttemperatur, um Betrieb bei höherer Geschwindigkeit zuzulassen.

2. Verfahren nach Anspruch 1, **dadurch gekennzeichnet, dass** die Haupteinspritzung von Kraftstoff im fetten pHCCI-Modus im Intervall von 30 Grad vor oberem Totpunkt (BTDC) bis 15 Grad nach dem oberen Totpunkt (ATDC), vorzugsweise im Intervall von 30 Grad BTDC bis 9 Grad ATDC eingespritzt wird.

3. Verfahren nach einem der Ansprüche 1-2, **dadurch gekennzeichnet, dass** die Temperatur des in den Zylinder (1) eingelassenen Gases während des fetten pHCCI-Modus im Intervall von 60 bis 200 Grad Celsius, vorzugsweise im Intervall von 60 bis 130 Grad Celsius liegt.

4. Verfahren nach einem der Ansprüche 1-3, **dadurch gekennzeichnet, dass** der fette pHCCI-Modus ferner eine Vor- und/oder eine Nacheinspritzung in einem Arbeitszyklus umfasst, wobei der in der Vor- und/oder Nacheinspritzung eingespritzte Kraftstoff vor dem Erreichen einer Auskleidung (33) einer Zylinderwand verdampft, wenn der Kraftstoffspritzstrahl (32) auf die Auskleidung gerichtet ist.

5. Verfahren nach einem der Ansprüche 1-3, **dadurch gekennzeichnet, dass** der gesamte in einem Arbeitszyklus im fetten pHCCI-Modus eingespritzte Kraftstoff in der Haupteinspritzung eingespritzt wird.

## Revendications

1. Procédé de fonctionnement d'un moteur diesel à combustion interne (19) comprenant au moins un cylindre (1) et un piston (5) doté d'une cavité de cuvette à piston (9), ledit moteur (19) comprenant :
- un système d'injection de carburant comprenant au moins un injecteur de carburant (2), à travers lequel du carburant est injecté dans une chambre de combustion (3), pour chaque cylindre (1) ;
- une unité de commande (4) qui commande ledit système d'injection de carburant ;
- au moins une soupape d'admission (6) pour admettre le gaz qui comprend de l'air frais dans ledit cylindre (1) ;
- au moins une soupape d'évacuation (7) pour évacuer les gaz brûlés dudit cylindre (1) ;
- une conduite de recirculation de gaz d'échappement (22) pour faire recirculer les gaz d'échappement dans le cylindre (1),
ledit moteur (19) étant raccordé à un système de traitement de gaz d'échappement comprenant un absorbant de NOₓ (30), ladite unité de commande (4) étant disposée pour pouvoir commuter le moteur (19) d'un premier mode de combustion classique à un second mode d'auto-allumage de charge homogène partiel (pHCCI) ayant une fenêtre de fonctionnement limitée par rapport à la charge et la vitesse du moteur, ledit mode pHCCI pouvant fonctionner dans un mode appauvri pour un mélange appauvri de carburant et dans un mode enrichi pour un mélange riche de carburant respectivement, ledit procédé étant **caractérisé en ce que** le mode pHCCI est commuté du pHCCI appauvri au pHCCI enrichi en réponse à un signal de commande indiquant que l'absorbant de NOₓ (30) doit être régénéré, ledit mode pHCCI enrichi ayant un rapport des gaz d'échappement remis en circulation de 20 à 55 % dans le gaz admis dans le cylindre (1), ledit mode pHCCI enrichi étant en outre **caractérisé en ce que** l'axe central d'un jet de carburant (32) dans une injection principale pour chaque cycle de travail est dirigé vers ladite cavité de cuvette à piston (8), ladite injection principale comprenant au moins 70 % du carburant à injecter dans chaque cycle de travail, ledit mode pHCCI enrichi est autorisé à avoir une valeur d'indice de noircissement de filtre (FSN) allant de 0,5 à 3,5 afin de permettre d'étendre la fenêtre de fonctionnement du moteur pendant le mode pHCCI enrichi, laquelle extension de la fenêtre de fonctionnement est obtenue en
- augmentant le volume d'air d'admission et/ou réduisant la température d'air de combustion, pour permettre un fonctionnement à des charges supérieures,
- augmentant la température d'air de combustion, pour permettre le fonctionnement à des charges inférieures ou
- réduisant la température d'air de combustion, pour permettre le fonctionnement à une vitesse supérieure.

2. Procédé selon la revendication 1 **caractérisé en ce que** ladite injection principale de carburant dans ledit mode pHCCI enrichi est injectée dans l'intervalle de 30 degrés avant le point mort haut (BTDC) à 15 degrés après le point mort haut (ATDC), de préférence dans l'intervalle de 30 degrés BTDC à 9 degrés ATDC.

3. Procédé selon l'une quelconque des revendications 1-2 **caractérisé en ce que** la température dudit gaz admis dans le cylindre (1) pendant ledit mode pHCCI enrichi est dans l'intervalle de 60 à 200 degrés Celsius, de préférence dans l'intervalle de 60 à 130 degrés Celsius.

4. Procédé selon l'une quelconque des revendications 1-3 caractérisé e n ce que ledit mode pHCCI enrichi comprend en outre une post-injection et/ou une injection pilote dans un cycle de travail, dans lequel ledit carburant injecté dans la post-injection et/ou l'injection pilote se vaporise avant d'atteindre un chemisage (33) d'une paroi de cylindre, si le jet de carburant (32) est dirigé vers le chemisage.

5. Procédé selon l'une quelconque des revendications 1-3 **caractérisé en ce que** tout le carburant injecté dans un cycle de travail dans ledit mode pHCCI enrichi est injecté dans l'injection principale.
